# EUROPÄISCHE PATENTSCHRIFT

(11) **EP 0 807 480 B1**
(45) Veröffentlichungstag und Bekanntmachung des Hinweises auf die Patenterteilung: **05.09.2001**
(21) Anmeldenummer: 97107616.1
(22) Anmeldetag: 09.05.1997
(51) Int. Cl.: B23B 13/02

(54) **Vorrichtung zum Einzeltransport stabförmiger Werkstücke zwischen Werkzeugmaschinen**
Device for transporting single rods between machine tools
Dispositif pour transporter des barres individuelles entre machines utils

(30) Priorität: 15.05.1996 DE 19619584
(43) Veröffentlichungstag der Anmeldung: 19.11.1997
(73) Patentinhaber: RSA Entgrat- u. Trenn-Systeme GmbH & Co., 58513 Lüdenscheid (DE)
(72) Erfinder: Schmidt, Rainer, Dipl.-Ing., 58762 Altena (DE)
(74) Vertreter: Patentanwälte Ostriga & Sonnet

(56) Entgegenhaltungen:
- US-A- 4 317 394

## Beschreibung

Die Erfindung betrifft eine Vorrichtung zum Transport stabförmiger Werkstücke, insbesondere Profilrohre od. dgl., von einer ersten zu einer zweiten Bearbeitungsmaschine.

Ein derartiger Stand der Technik ist beispielsweise im Prospekt "ADIGE TS 71" der Firma ADIGE SALA (Italien) bekannt. In diesem Prospekt ist offenbart, daß beispielsweise einer Schneidvorrichtung nachgeordnet ein Entsorgungsbandsystem vorhanden ist, welches über ein als Zwischenpuffer dienendes Bündelmagazin mit einer Entgratmaschine verbunden ist. Auch ist es möglich, daß das Entsorgungsband die einzelnen Fixlängen über eine geringe Entladehöhe direkt in unterschiedlich große Ablagebehälter abwirft.

Der grundsätzliche Nachteil eines derartigen Standes der Technik besteht darin, daß einerseits zwischen einer ersten Bearbeitungsmaschine und einer zweiten Bearbeitungsmaschine ein Zwischenpuffer für die bearbeiteten Profile notwendig ist und andererseits, daß die in einem Zwischenpuffer od. dgl. gesammelten Profile dort ungeordnet gesammelt werden und zwecks Weiterbearbeitung in einer nachgeordneten Bearbeitungsmaschine zunächst wieder in eine bestimmte Ordnung gebracht werden müssen. Das Wiederherstellen dieser Ordnung ist zeit- und auch kostenaufwendig und wird in der Praxis häufig auch im Handbetrieb durchgeführt.

Die Aufgabe der Erfindung besteht deshalb darin, eine Vorrichtung zum Transport stabförmiger Werkstücke zu schaffen mit der auch bei kurzen Taktzeiten der ersten Bearbeitungsmaschine ein sicherer und geordneter Transport der Werkstücke zur zweiten Bearbeitungsmaschine möglich wird.

Die Lösung dieser Aufgabe ergibt sich aus den Merkmalen des Anspruches 1, wonach die Vorrichtung eine der ersten Bearbeitungsmaschine nachgeordnete, die Fallrichtung zeitweise freigebende Auflageebene aufweist, daß unterhalb dieser bewegbaren Auflageebene eine den linearen Transport sicherstellende Einrichtung angeordnet ist, die oberhalb einer Zuführung zur zweiten Bearbeitungsmaschine in Fallrichtung zu öffnen ist.

Mit Hilfe der erfindungsgemäßen Vorrichtung ist es auf vorteilhafte Weise möglich, die in kurzen zeitlichen Abständen von der ersten Bearbeitungsmaschine ausgestoßenen Profile durch den Wechsel der Transportebene auf kürzestem Wege so zu einer zweiten Bearbeitungsmaschine zu transportieren, daß diese auf geordnete Weise der zweiten Bearbeitungsmaschine übergeben werden. Anders als beim Stand der Technik wird hierbei die noch in der ersten. Bearbeitungsmaschine vorhandene identische Ausrichtung der aufeinanderfolgenden Profile aufrechterhalten.

Bei einer vorteilhaften Ausführungsform der Erfindung ist die Auflageebene zeitweise durch einen Antrieb quer zur Bewegungsrichtung der Profile entfernbar. Durch diese Art des Antriebes kann - gekoppelt mit dem Ausstoß der vorgeordneten Bearbeitungsmaschine - die Auflageebene im Takt der vorgeordneten Maschine maschinell auf sehr einfache Weise bewegt werden.

Bei einer weiteren vorteilhaften Vorrichtung der Erfindung wird die Transporteinrichtung durch zwei parallele, synchron angetriebene Transportbänder gebildet, deren Transportebenen v-förmig zueinander stehen.

Diese Ausführungsform hat den zusätzlichen Vorteil, daß jedes einzelne von der Auflageebene in die Transporteinrichtung fallende Profil durch die V-förmig zueinanderstehenden Transportebenen identisch ausgerichtet wird.

Bei einer weiteren vorteilhaften Ausführungsform der Erfindung ist mindestens ein Transportband unter Freigabe einer in Fallrichtung weisenden ersten Öffnung quer zur Bewegungsrichtung der Profile bzw. des Transportbandes verschwenkbar, wodurch auf sehr einfache Weise ein Transport der Profile zu der Zuführeinrichtung der zweiten Bearbeitungsmaschine möglich wird.

Eine bevorzugte Ausführungsform der Erfindung ist dadurch gekennzeichnet, daß die Transporteinrichtung wenigstens zweiteilig ausgebildet ist und das jede Teil-Transporteinrichtung zwei parallele, synchron angetriebene Transportbänder aufweist, die V-förmig zueinander angeordnet sind. Durch diese Art der Konstruktion der Transporteinrichtung ist es zum Zwecke der Freigabe einer in Fallrichtung weisenden Öffnung nicht notwendig, die gesamte Transporteinrichtung zu verschwenken. Darüber hinaus hat diese Ausführungsform in Zusammenwirken mit einer weiteren Ausführungsform, bei der die der ersten Bearbeitungsmaschine unmittelbar nachgeordnete Teil-Transporteinrichtung einseitig kippbar ist, weitere Vorteile. So entsteht bei der Kippung zwischen der ersten Bearbeitungsmaschine und der Teil-Transporteinrichtung ein Freiraum, der als Fallöffnung für kurze Profillängen, insbesondere für Kapp- und Reststücke nutzbar ist. D.h., derartige Profilabschnitte können während des Betriebs der Transporteinrichtung auf einfache Weise in einen (oder mehrere) unterhalb der Fallöffnung angeordneten Behälter entsorgt werden, ohne daß der Betrieb gestört wird.

Die Steuerung der unterschiedlichen Transportwege einerseits für Profillängen z.B. < 200 mm, insbesondere Kapp- und Reststücke, und andererseits für längere Profile erfolgt über die der Vorrichtung zum Einzeltransport stabförmiger Werkstücke vorgeschalteten ersten Bearbeitungsmaschine. D.h. die vorgeschaltete Bearbeitungsmaschine greift direkt u.a. in die Steuerung der Kippvorrichtung ein.

Weitere Vorteile der Erfindung ergeben sich aus den nachfolgenden Unteransprüchen sowie aus der Beschreibung eines Ausführungsbeispiels. Es zeigen:
- Fig. 1: eine Seitenansicht einer Vorrichtung zum Transport stabförmiger Werkstücke,
- Fig. 2: eine Draufsicht auf die Vorrichtung gemäß Fig. 1,
- Fig. 3: eine Darstellung der Vorrichtung gemäß Schnittlinie III-III in Fig. 1,
- Fig. 4: eine Darstellung der Schwenkvorrichtung für die Transportbänder gemäß Ansichtspfeil IV in Fig. 1
- Fig. 5: die Schwenkvorrichtung gemäß Ansichtspfeil V in Fig. 4 und
- Fig. 6: eine Darstellung der Vorrichtung gemäß Schnittlinie VI-VI in Fig. 1.

In den Zeichnungen ist eine Vorrichtung zum Transport stabförmiger Werkstücke insgesamt mit der Bezugsziffer 10 bezeichnet.

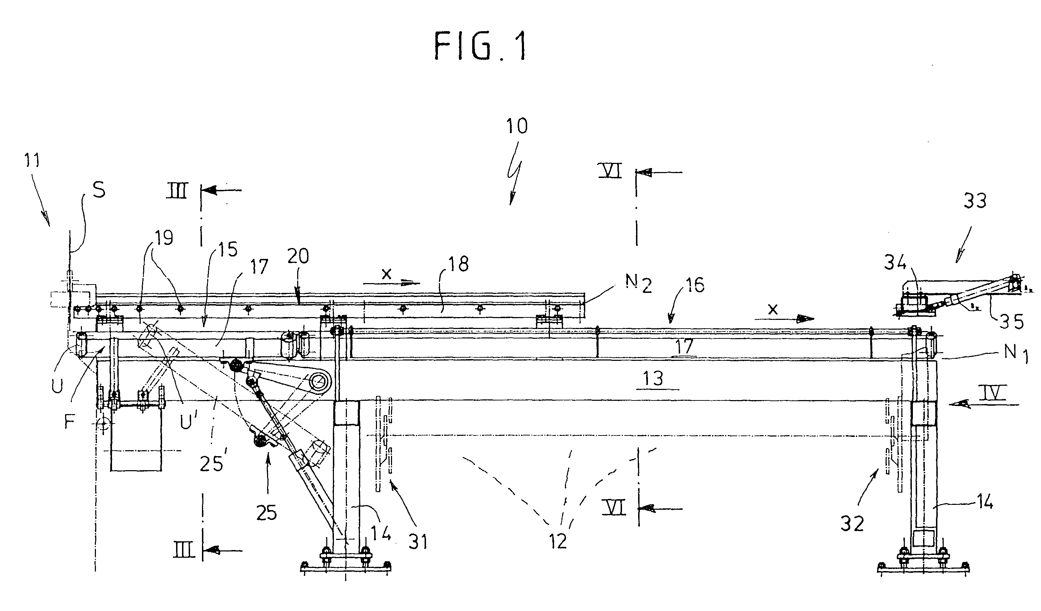

In dem in den Fig. 1 bis 6 dargestellten Ausführungsbeispiel ist der Vorrichtung 10 als erste Bearbeitungsmaschine eine Trennmaschine 11 vorgeordnet und als zweite Bearbeitungsmaschine eine Entgratmaschine 12 nachgeordnet.

Die Vorrichtung 10 weist zunächst einen Maschinenrahmen 13 mit zugehörigen, am Boden befestigten Stützen 14 auf. Auf dem Maschinenrahmen 13 sind auf dem Niveau N₁ zwei miteinander fluchtende und unterschiedlich lange Transporteinrichtungen 15 und 16 angeordnet, die aus parallelen, V-förmig zueinander angeordneten sowie synchron angetriebenen Transportbändern 17 bestehen, welche jeweils Umlenkrollen U aufweisen. Die beispielsweise in den Zeichnungen 1 und 2 dargestellte Vorrichtung 10 ist für bis zu zwei Meter lange Profile (Fixlängen) vorgesehen und weist eine Gesamtlänge von ca. 3,50 Meter auf. In einer derartigen Vorrichtung 10 ist die in Bewegungsrichtung x zunächst angeordnete Transporteinrichtung 15 deutlich kürzer als die nachfolgende Transporteinrichtung 16.

Oberhalb der Transporteinrichtung 15 und 16 ist auf einem Niveau N₂ ein aus einem Rahmen 18 mit quer zur Bewegungsrichtung x angeordneten Bolzen 19 bestehende Auflageebene 20 befestigt, welche z.B. über einen Exzenterantrieb 21 im wesentlichen quer zur Bewegungsrichtung x der geschnittenen Profile bewegbar ist. Die Auflageebene 20 ist durch Halter 22 am Maschinenrahmen 13 bewegbar angeordnet. Am Maschinenrahmen 13 ist oberhalb des Niveaus N₂ der Auflageebene 20 eine Führungsschiene 23 befestigt, die als Anlagefläche 24 für die von der Trennmaschine 11 ausgestoßenen Profile (Fixlängen) oder Kapp- bzw. Reststücke dient.

Die auf dem Niveau N₁ angeordnete Transporteinrichtung 15 weist eine Kippvorrichtung 25 (s. gestrichelt dargestellte Stellung 25' in Fig. 1) auf, mit deren Hilfe Kapp- und Reststücke mit einer Gesamtlänge z.B. < 200 mm und Profile (Fixlängen) mit einer Gesamtlänge von z.B. < 100 mm aus der Vorrichtung 10 entfernt werden können. Dies wird dadurch möglich, daß durch die Kippung der Transportvorrichtung 15 (s. Fig. 1 gestrichelt) zwischen dem Trennwerkzeug S und den vorderen Umlenkrollen U' der Transportvorrichtung 15 unterhalb der Auflageebene 20 eine Fallöffnung F geschaffen werden kann, so daß kurze Kapp- und Reststücke sowie kurze Profile (Fixlängen) in Fallrichtung y an der Transportvorrichtung 15 vorbei in entsprechende Behälter gelangen können. Durch eine in der Fallinie der Werkstücke bewegbar angeordnete Pendelklappe K kann die Bewegungsrichtung beeinflußt werden.

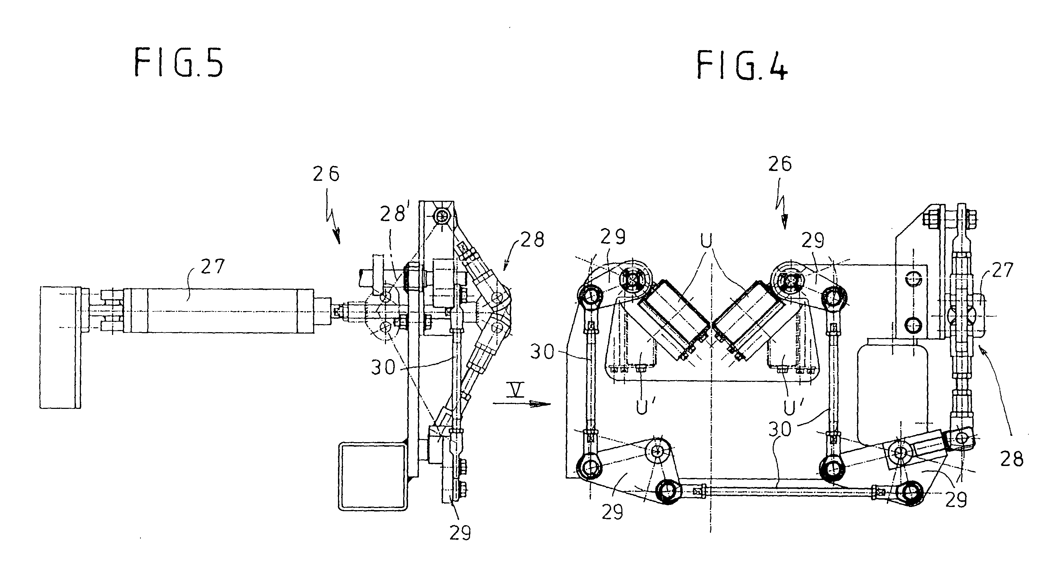

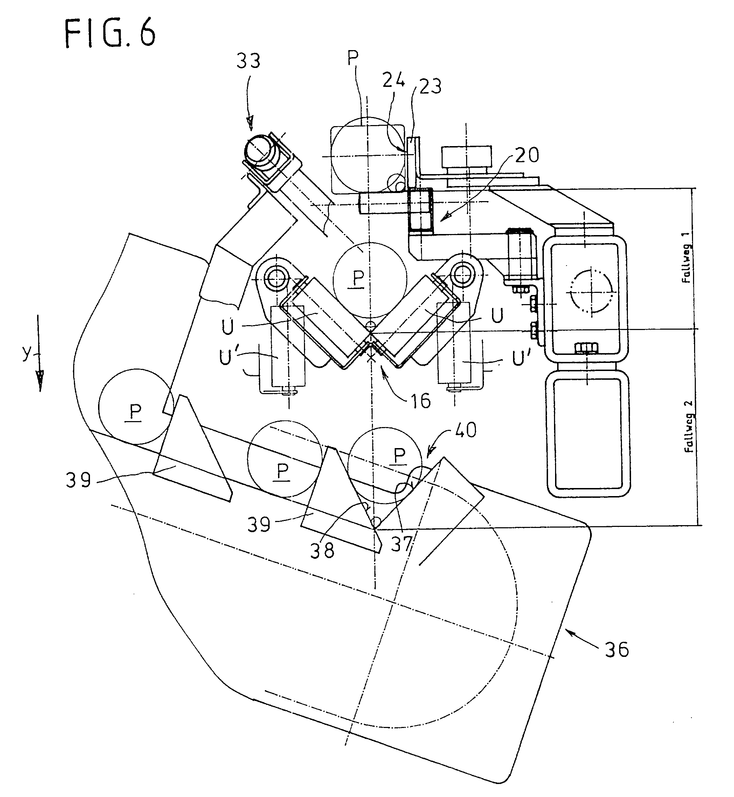

Dagegen ist die Transporteinrichtung 16 mit einer Schwenkvorrichtung 26 versehen, die in den Fig. 4 und 5 dargestellt ist. Die Schwenkvorrichtung 26 weist einen Antrieb 27 auf, der über eine Lenkeranordnung 28, Winkelhebel 29 und Zug-Druckstangen 30 mit den Umlenkrollen U der Transportbänder 17 verbunden ist. Die Lenkeranordnung 28 ist so ausgebildet, daß in einer Endposition des Antriebes 27 (s. Position 28' in Fig. 5), wie auch in der anderen Endposition des Antriebes (z.B. Pneumatik-Zylinder) 27 die Geschlossenstellung der Umlenkrollen U erreicht wird, während in der Mittellage die Umlenkrollen U' die Fallrichtung y freigeben.

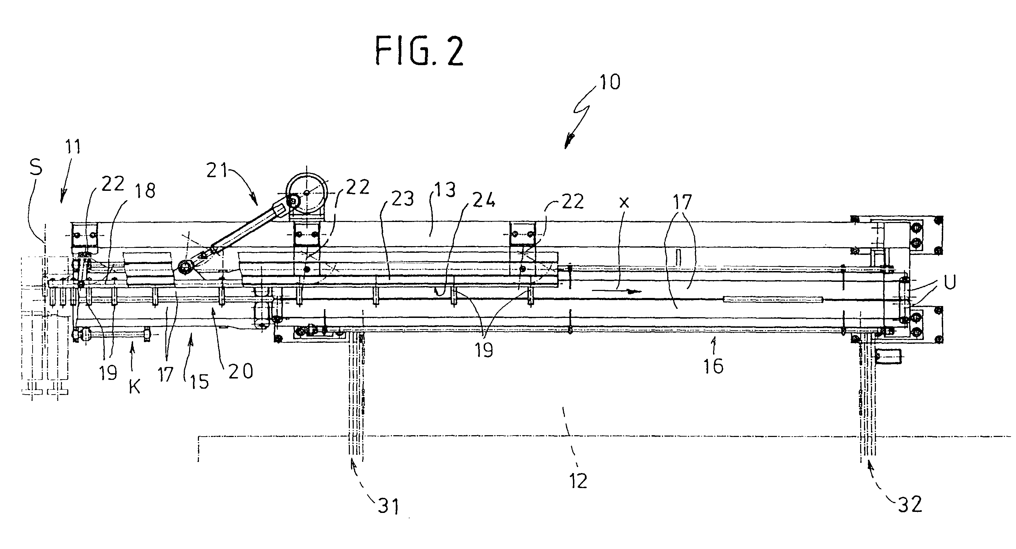

In den Fig. 1 und 2 ist unterhalb der Transporteinrichtung 16 z.B. eine Entgratmaschine 12 als zweite Bearbeitungsmaschine mit ihrer Festseite 31 und ihrer Losseite 32 angedeutet. Darüber hinaus ist in der Fig. 1 oberhalb der Losseite 32 der Entgratmaschine 12 ein an der Entgratmaschine 12 bewegbar angeordneter Endanschlag 33 zu sehen, dessen Anschlagplatte 34 durch Betätigung eines Antriebes, z.B. eines Pneumatik-Zylinders 35 in die V-förmig zueinander angeordneten, aus Transportbändern 17 bestehende Transporteinrichtung 16 eintauchen kann. Dieser Endanschlag 33 ist in der Regel so positioniert, daß er mit einem nicht dargestellten Anschlag der Entgratmaschine 12 übereinstimmt. Nur für den Fall, daß ein Überlänge aufweisendes Kapp- oder Reststück nicht über die Kippvorrichtung 25 entsorgt werden kann, ist es möglich, den Endanschlag 33 in die gezeigte Stellung zu verfahren, so daß das überlange Kapp- oder Reststück in Bewegungsrichtung x aus der Transportvorrichtung 16 herausgefahren werden kann.

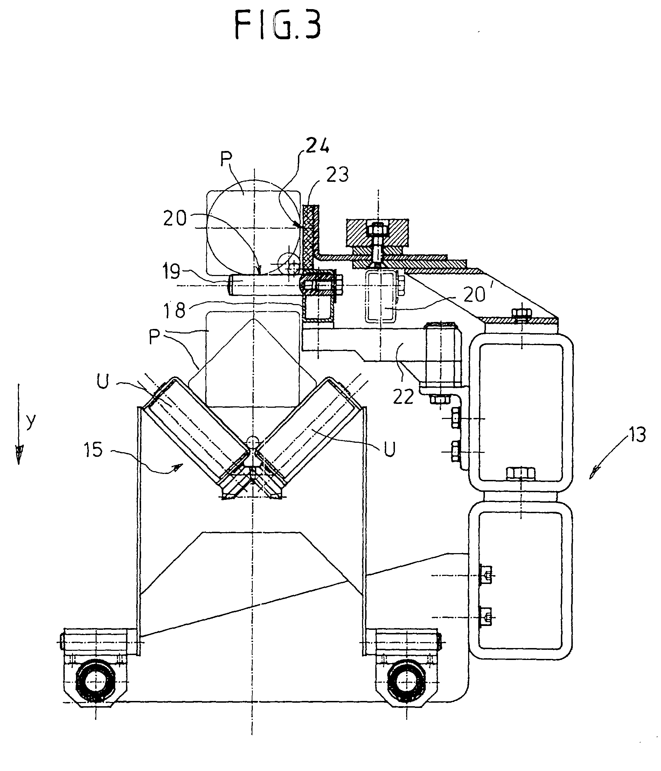

Im Normalbetrieb wird ein Ausgangsprofil automatisch so in der Trennmaschine 11 positioniert, daß eine gewünschte Profillänge (Fixlänge) über das mit der Bezugsziffer S gekennzeichnete Trennwerkzeug hinaus in die Vorrichtung 10 hineinragt und auf der Auflageebene 20 aufliegt. Nach der Fixierung des Profils mit Hilfe von nicht dargestellten, in Bewegungsrichtung x vor und hinter dem Trennwerkzeug S angeordneten Spannbacken wird die gewünschte Fixlänge abgetrennt, die Spannbacken geöffnet und durch einen Antrieb 21 die Auflageebene 20 quer zur Bewegungsrichtung x entfernt (s. Position 20' in Fig. 3 und 6), so daß die Fixlänge in Richtung y in die V-förmige Transporteinrichtung 15 oder bei Kippung der Transporteinrichtung 15 in einen Behälter fällt.

Fällt die Fixlänge in die Transporteinrichtung 15, wird sie in x-Richtung weiter in die niveaugleiche Transporteinrichtung 16 bewegt, wobei sich dabei aufgrund des synchronen Antriebs der paarweise angeordneten Transportbänder 17 die Ausrichtung des Profils nicht ändert. Wenn die Fixlänge an der in die Transporteinrichtung 16 eintauchenden Anschlagplatte 34 anschlägt, öffnen sich die Transportbänder 17 der Transporteinrichtung 16 und die Fixlänge fällt wiederum in Fallrichtung y in eine in der Fig. 6 dargestellte Zuführeinrichtung 36 der Entgratmaschine 12. Der Öffnungszeitpunkt der Transporteinrichtung 16 ist so mit der Bewegung der Zuführeinrichtung 36 gekoppelt, daß die Fixlänge in eine aus einer Anlagekante 37 und einer V-förmig dazu angeordneten Fläche 38 eines Mitnehmers 39 gebildeten V-förmigen Aufnahmeraum 40 fällt, wodurch ebenso wie bei der V-förmigen Stellung der Transportbänder 17 zueinander eine gleichbleibende übereinstimmende Ausrichtung aller Fixlängen gewährleistet ist.

In der Fig. 6 sind die Fallwege 1 und 2 eines Profils P von der Auflageebene 20 in die Transporteinrichtung 15, und von der Transportvorrichtung 16 in die Zuführeinrichtung 36 dargestellt. Die sehr geringen Fallwege 1 und 2 zeigen, daß in der Vorrichtung 10 ein schonender Umgang mit den Profilen P gewährleistet ist.

Die Steuerung des Transportweges der Kapp- oder Reststücke sowie von Fixlängen z.B. < 100 mm erfolgt von der Trennmaschine 11 aus. Das heißt die Transporteinrichtung 15 sowie auch der Endanschlag 33 werden durch Steuersignale der Sägemaschine 11 in die jeweilig "richtige" Position bewegt.

## Patentansprüche

1. Vorrichtung zum Transport stabförmiger Werkstücke, insbesondere Profilrohre od. dgl., von einer ersten zu einer zweiten Bearbeitungsmaschine, **dadurch gekennzeichnet**, daß die Vorrichtung (10) eine der ersten Bearbeitungsmaschine (11) nachgeordnete, die Fallrichtung (y) zeitweise freigebende Auflageebene (20) aufweist, daß unterhalb der bewegbaren Auflageebene (20) eine den linearen Transport sicherstellende Einrichtung (15, 16) angeordnet ist, die oberhalb einer Zuführung (36) zur zweiten Bearbeitungsmaschine (12) in Fallrichtung (y) zu öffnen ist.

2. Vorrichtung nach Anspruch 1, **dadurch gekennzeichnet**, daß die Auflageebene (20) zeitweise durch einen Antrieb (21) quer zur Bewegungsrichtung (x) der Profile entfernbar ist

3. Vorrichtung nach Anspruch 1 oder 2, **dadurch gekennzeichnet**, daß die Transporteinrichtung (15, 16) durch zwei parallele, synchron angetriebene Transportbänder (17) gebildet wird, deren Transportebenen V-förmig zueinander stehen.

4. Vorrichtung nach einem der vorangehenden Ansprüche, **dadurch gekennzeichnet**, daß mindestens ein Transportband (17) unter Freigabe einer in Fallrichtung (y) weisenden ersten Öffnung quer zur Bewegungsrichtung (x) der Profile bzw. des Transportbandes (17) verschwenkbar ist.

5. Vorrichtung nach einem der vorangehenden Ansprüche, **dadurch gekennzeichnet**, daß die Transporteinrichtung wenigstens zweiteilig ausgebildet ist und daß jede Teil-Transporteinrichtung (15, 16) zwei parallele, synchron angetriebene Transportbänder (17) aufweist, die V-förmig zueinander angeordnet sind.

6. Vorrichtung nach einem der vorangehenden Ansprüche, **dadurch gekennzeichnet**, daß die der ersten Bearbeitungsmaschine (11) unmittelbar nachgeordnete Teil-Transporteinrichtung (15) zur Entfernung von kurzen Profillängen, insbesondere Kapp- und Reststücke, unter Freigabe einer zweiten Fallöffnung einseitig kippbar ist.

7. Vorrichtung nach einem der vorangehenden Ansprüche, **dadurch gekennzeichnet**, daß die Teil-Transporteinrichtung (16) einen Endanschlag (33) aufweist, der mit einem Anschlag der zweiten Bearbeitungsmaschine (12) übereinstimmt.

8. Vorrichtung nach Anspruch 7, **dadurch gekennzeichnet**, daß der Endanschlag (33) eine Auslösevorrichtung für die Freigabe der ersten Fallöffnung aufweist.

9. Vorrichtung nach Anspruch 7 oder 8, **dadurch gekennzeichnet**, daß der Endanschlag (33) in Abhängigkeit von der Werkstücklänge einstellbar ist.

10. Vorrichtung nach Anspruch 7, 8 oder 9, **dadurch gekennzeichnet**, daß der Endanschlag (33) ein Teil der nachgeordneten Bearbeitungsmaschine (12) darstellt.

11. Vorrichtung nach Anspruch 7 bis 10, **dadurch gekennzeichnet**, daß der Endanschlag (33) aus der Bewegungsbahn der in der Teil-Transporteinrichtung (16) angeordneten Profile schwenkbar ist.

12. Vorrichtung nach einem der vorangehenden Ansprüche, **dadurch gekennzeichnet**, daß die Steuerungen der ersten und zweiten Bearbeitungsmaschine (11, 12) sowie der Vorrichtung (10) zum Einzeltransport stabförmiger Werkstücke aufeinander abgestimmt sind.

## Claims

1. Apparatus for transporting rod-shaped workpieces, in particular section tubes or the like, from a first machine tool to a second, **characterized in that** the apparatus (10) comprises a support plane (20), which is disposed downstream of the first machine tool (11) and intermittently releases the drop direction (y), that disposed below the movable support plane (20) is a device (15, 16), which ensures the linear transport and is openable in drop direction (y) above a feeder (36) to the second machine tool (12).

2. Apparatus according to claim 1, **characterized in that** the support plane (20) is intermittently removable by means of a drive (21) transversely relative to the direction of motion (x) of the sections.

3. Apparatus according to claim 1 or 2, **characterized in that** the transport device (15, 16) is formed by two parallel, synchronously driven conveyor belts (17), the conveying planes of which are positioned relative to one another in a V-shaped manner.

4. Apparatus according to one of the preceding claims, **characterized in that** at least one conveyor belt (17) is capable of swinging transversely relative to the direction of motion (x) of the sections and/or of the conveyor belt (17) with simultaneous release of a first opening directed in drop direction (y).

5. Apparatus according to one of the preceding claims, **characterized in that** the transport device is of an at least two-piece construction and that each transport device portion (15, 16) comprises two parallel, synchronously driven conveyor belts (17), which are disposed relative to one another in a V-shaped manner.

6. Apparatus according to one of the preceding claims, **characterized in that** the transport device portion (15) disposed immediately downstream of the first machine tool (11) is tiltable at one end with simultaneous release of a second drop opening for the removal of short section lengths, in particular clippings and residual pieces.

7. Apparatus according to one of the preceding claims, **characterized in that** the transport device portion (16) comprises a limit stop (33), which corresponds with a stop of the second machine tool (12).

8. Apparatus according to claim 7, **characterized in that** the limit stop (33) comprises a trip apparatus for the release of the first drop opening.

9. Apparatus according to claim 7 or 8, **characterized in that** the limit stop (33) is adjustable in dependence upon the workpiece length.

10. Apparatus according to claim 7, 8 or 9, **characterized in that** the limit stop (33) is part of the downstream machine tool (12).

11. Apparatus according to claim 7 to 10, **characterized in that** the limit stop (33) is capable of swivelling out of the path of motion of the sections disposed in the transport device portion (16).

12. Apparatus according to one of the preceding claims, **characterized in that** the controllers of the first and second machine tool (11, 12) as well as of the apparatus (10) for individually transporting rod-shaped workpieces are tuned to one another.

## Revendications

1. Dispositif pour transporter des pièces façonnées en forme de barres, en particulier des tubes profilés ou analogues, depuis une première à une deuxième machine-outil, caractérisé par le fait que le dispositif (10) présente un plan de pose (20) disposé en aval de la première machine-outil (11), libérant par moments la direction de chute (y), par le fait qu'au-dessous du plan de pose (20) déplaçable est disposé un dispositif (15, 16), assurant le transport linéaire, produisant l'ouverture vers la deuxième machine-outil (12) dans la direction de chute (y), au-dessus d'un dispositif d'amenée (36).

2. Dispositif selon la revendication 1, caractérisé par le fait que le plan de pose (20) est susceptible d'être écarté par moments, au moyen d'un entraînement (21), en direction transversale par rapport à la direction de déplacement (x) des profilés.

3. Dispositif selon la revendication 1 ou 2, caractérisé par le fait que le dispositif de transport (15, 16) est formé par deux bandes transporteuses (17) parallèles, entraînées de façon synchrone, dont les plans de transport font un V entre eux.

4. Dispositif selon l'une des revendications précédentes, caractérisé par le fait qu'au moins une bande transporteuse (17) est susceptible de pivoter en libérant une première ouverture, tournée dans la direction de chute (y), transversalement par rapport à la direction de déplacement (x) des profilés ou de la bande transporteuse (17).

5. Dispositif selon l'une des revendications précédentes, caractérisé par le fait que le dispositif de transport est réalisé au moins en deux parties, et par le fait que chaque dispositif de transport partiel (15, 16) présente deux bandes transporteuses (17) parallèles, entraînées de façon synchrone, faisant entre elles un V.

6. Dispositif selon l'une des revendications précédentes, caractérisé par le fait que le dispositif de transport partiel (15), disposé directement en aval de la première machine-outil (11), est susceptible d'être basculé sur un côté pour éliminer des longueurs de profil courtes, en particulier des pièces d'amorce et de chute, en libérant une deuxième ouverture de chute.

7. Dispositif selon l'une des revendications précédentes, caractérisé par le fait que le dispositif de transport partiel (16) présente une butée d'extrémité (33), coïncidant avec une butée appartenant à la deuxième machine-outil (12).

8. Dispositif selon la revendication 7, **caractérisé en ce que** la butée d'extrémité (33) présente un dispositif de déclenchement pour libérer la première ouverture de chute.

9. Dispositif selon la revendication 7 ou 8, caractérisé par le fait que la butée d'extrémité (33) est réglable en fonction de la longueur de la pièce façonnée.

10. Dispositif selon la revendication 7, 8 ou 9, caractérisé par le fait que la butée d'extrémité (33) forme une partie de la machine-outil (12) installée en aval.

11. Dispositif selon les revendications 7 à 10, caractérisé par le fait que la butée d'extrémité (33) est susceptible de pivoter hors de la trajectoire de déplacement des profilés disposés dans le dispositif de transport partiel (16).

12. Dispositif selon l'une des revendications précédentes, caractérisé par le fait que les commandes, de la première et de la deuxième machine-outil (11, 12) ainsi que du dispositif (10) pour effectuer le transport individuel de pièces façonnées en forme de barres, sont adaptées les unes aux autres.
